# EUROPEAN PATENT APPLICATION

(11) **EP 0 724 180 A2**
(43) Date of publication of application: **31.07.1996**
(21) Application number: 96101225.9
(22) Date of filing: 29.01.1996
(51) Int. Cl.: G02F 1/1335, G02F 1/13

(54) **Liquid crystal display and electronic appliance comprising the same**

(30) Priority: 30.01.1995 JP 12932/95
(71) Applicant: CASIO COMPUTER CO., LTD., Shinjuku-ku, Tokyo 163-02 (JP)
(72) Inventor: Yano, Junro, c/o Casio Computer Co., Ltd., Sakae-cho 3-chome, Hamura-shi, Tokyo (JP)
(74) Representative: Grünecker, Kinkeldey, Stockmair & Schwanhäusser Anwaltssozietät

(57) **Abstract**

In an electronic wrist watch, a liquid crystal display device (4) is arranged above a timepiece module (3) having a dial plate (9, 10, 11) and a hand (15, 16) in order that a member located below this liquid crystal display device is visibly confirmed under better condition. When the liquid crystal display device (4) is under transmission condition, the time instant defined by the dial plate (9) and the hand (15, 16) is readable, whereas when the liquid crystal display device (4) displays the data, this data is readable. A polarization plate of the liquid crystal display device (4) is constructed of two sets of polarization plates. One polarization plate (47) located outside the electrode substrate owns high transmittance and a high polarizing factor, whereas the other polarization plate (48) located inside thereof owns high transmittance and a polarizing factor lower than that of the outside polarization plate (47). Thus, the dial plate (9) and the hand (15, 16) can be easily observed through the liquid crystal display device (4).

## Description

The present invention generally relates to a liquid crystal display device and an electronic appliance with such a liquid crystal display device arranged at an opening of an appliance case. More specifically, the present invention is directed to an electronic appliance where various sorts of information are displayed on the liquid crystal display device, and an inside of the appliance case is visible through this liquid crystal display device.

Conventionally, analog watches combining analog display members with liquid crystal display devices are known as one of electronic appliances. An analog display member of this analog watch displays a time instant by rotating hands with respect to a dial plate. The liquid crystal display device is arranged above either the dial plate portion of this analog display member, or the hands thereof. The liquid crystal display device displays the information other than the time instant, so that this analog watch can display both of the time instant and other information. When the liquid crystal display device is located above the dial plate and the hands, the dial plate and also the hands are read while displaying the information on this liquid crystal display device. As a consequence, there is a drawback that the dial plate and the hands cannot be easily observed from the portions other than the display portion. Therefore, when the time instant defined by the dial plate need be correctly and visibly recognized, the mode selection is performed to bring the liquid crystal display device into the transmittable condition. As a result, in the liquid crystal display device of the above-described analog watch, a selection can be made between the information display mode and the transmission visible mode for the time instant.

However, the above-explained conventional analog watch owns such a problem that since the dial plate and the hands are visibly recognized through the liquid crystal display device, brightness is lowered, so that these dial plate and the hands can be hardly observed. On the other hand, in the case that the transmission characteristic of the liquid crystal display device is emphasized to readily observe the dial plate and the hands, the display contract would be lowered. Thus, there is another problem that when the liquid crystal display device displays the data, the content of this data cannot be easily read, namely difficult readability. These problems are commonly applied to many other electronic appliances in which any members other than the dial plate and hands are visibly confirmed, and therefore a great expectation has been made to solve these problems.

The present invention has been made to solve the above-explained problems, and therefore, has an object to provide a liquid crystal display device capable of easily achieving good visibility when a member visible through the liquid crystal display device is observed.

Another object of the present invention is to provide an electronic appliance equipped with a liquid crystal display device where a member visible through the liquid crystal display device can be reserved under better condition.

To achieve the above-described objects, a liquid crystal display device employed in the present invention is comprised of: one pair of transparent electrode substrates arranged opposite to each other, a display electrode being formed on each of inner surfaces of the electrode substrates; a liquid crystal material sealed between said one pair of transparent electrode substrates; a first polarization plate arranged outside one electrode substrate of said one pair of transparent electrode substrates, and having high transmittance and a high polarizing factor; and a second polarization plate arranged outside the other electrode substrate of said one pair of transparent electrode substrates, and having high transmittance and a polarizing factor lower than that of said first polarization plate. With employment of such a structure, there is an advantage that the light can be readily transmitted, and even when an article is observed through the liquid crystal display device, this article can be clearly and visibly confirmed.

A more complete understanding of the invention may be gained by reading the subsequent detailed description with reference to the accompanying drawings, in which:
Fig. 1 is a sectional view for showing an electronic appliance to which the present invention idea has been applied; and
Fig. 2 is a sectional view for indicating a liquid crystal display device employed in the electronic appliance of Fig. 1.

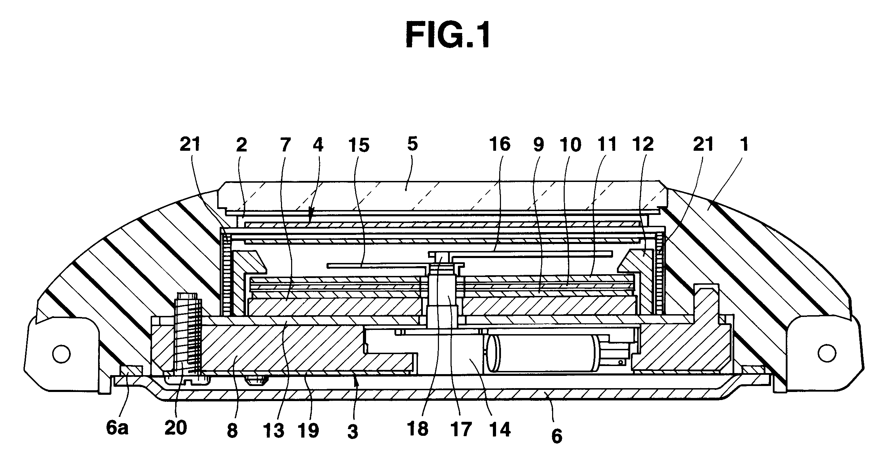

Fig. 1 represents a wrist watch to which the inventive idea of the present invention has been applied, according to an embodiment. An opening portion 2 is formed at an upper portion of a wrist watch case 1 corresponding to an appliance case. A timepiece module 3 equipped with a hand display means for displaying time by way of hands, and a liquid crystal display device 4 are arranged within this opening portion 2. A timepiece glass 1 is mounted on an upper surface of the opening portion 2 of this wrist watch case 1, whereas a rear lid 6 is mounted on a lower surface of the opening portion 2 via a water-proof packing 6a, so that the wrist watch case 1 can be tightly sealed.

The timepiece module 3 is constructed of an upper housing 7 made of a synthetic resin and a lower housing 8. This timepiece module 3 is arranged in such a manner that a supporting plate 9 is arranged on an upper surface of the upper housing 7, and an electro-luminescent light-emitting device 10 and a semi-transmission reflection plate 11 are successively stacked on this supporting plate 9. A stacked member constructed of these supporting plate 9, electro-luminescent light-emitting device 10, and the semi-transmission reflection plate 11 may function as a dial plate of the wrist watch. The peripheral portion of this stacked member is depressed by a depressing member 12 raised from the upper housing 7 so as to be fixed. Time indicating numerals from "1" to "12" (not shown) are printed on the peripheral portion of this semi-transmission reflection plate 11. In addition, a circuit board 13 constructed of an electronic circuit (not shown) is sandwiched between the upper hosing 7 and the lower housing 8 so as to be fixed.

With respect to such various sorts of members employed in the upper portion, a hand mechanism 14 is mounted on the lower housing 8. In response to the electric signal issued from the electronic circuit, the hand mechanism 14 rotates an hour hand 15 and a minute hand 16. This hand mechanism 14 is constructed of a stepper motor, a rotor, a gear mechanism, and a hour hand shaft 17 and also a minute hand shaft 18. Both of the hour hand shaft 17 and the minute hand shaft 18 penetrate the circuit board 13, the upper housing 7, the dial plate 9, the electro-luminescent light-emitting device 10, and the semi-transmission reflection plate 11. The hour hand 15 and the minute hand 16 are mounted on the penetrated edge portions of the hour hand shaft 17 and minute hand shaft 18. The timepiece module 3 constructed of the above-explained members is mounted in the wrist watch case 1 by way of a screw 20 under such a condition that this timepiece module 3 is assembled by a ground plate 19.

The above-explained, electro-luminescent light-emitting device 10 is a plate-shaped lighting member for emitting light in response to the electric signal derived from the electronic circuit. This electro-luminescent light-emitting device 10 emits the light by operating a lighting switch (not shown) provided on the wrist watch case 1, and then this light illuminates the hour hand 15, the minute hand 16, and the liquid crystal display device 4 through the semi-transmission reflection plate 11. The semi-transmission reflection plate 11 arranged on the upper surface of the electro-luminescent light-emitting device 10 owns the function of the reflection plate. Also, the semi-transmission reflection plate 11 reflects the light incident thereon through the liquid crystal display device 4, so that the information displayed on the liquid crystal display device 4 can be observed, or becomes visible. When the electro-luminescent light-emitting device 10 emits the light, this semi-transmission reflection plate 11 transmits this light while being spread. Since the semi-transmission reflection plate 11 is arranged above the liquid crystal display device 4, the entire lower portion of this liquid crystal display device 4 can be uniformly illuminated.

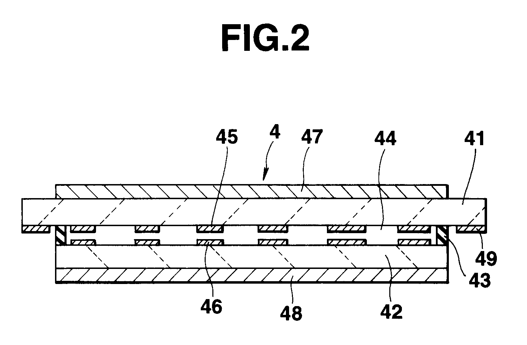

The above-explained liquid crystal display device 4 is positioned at an upper portio of the opening portion 2 within the wrist watch case 1. Fig. 2 schematically shows a structure of this liquid crystal display device 4. As shown in this structure of the liquid crystal display device 4, a first electrode substrate 41 made of a transparent glass plate and positioned at an upper portion of this liquid crystal display device 4 is jointed with a second electrode substrate 42 made of a similar material thereto and located at a lower portion of this liquid crystal display device 4 by way of a sealing member 43. A liquid crystal material 44 is filled into an inside space defined by the first and second electrode substrates 41 and 42, and also the sealing member 43. Electrodes 45 and 46 are fabricated on inner surfaces of these first and second electrode substrates 41 and 42, which are located opposite to each other. A first polarization plate 47 and a second polarization plate 48 are jointed with each other on outer surfaces of the first and second electrode substrates 41 and 42 under stacked condition. The polarization axis of the first polarization plate 47 is located perpendicular to that of the second polarization plate 48. In this case, the width of the first electrode substrate 41 is made wider than that of the second electrode substrate 42, and further the peripheral portion of the first electrode substrate 41 is extended outwardly, as compared with that of the second electrode substrate. A terminal portion 49 is formed on a lower surface of this extended peripheral portion. As represented in Fig. 1, this terminal portion 49 is made in contact with an inter connector 21 arranged within the wrist watch case 1, so that the display signal is inputted from the electronic circuit of the circuit board 13 so as to display various information.

As described above, such a liquid crystal display device 4 is positioned within the opening portion 2 of the wrist watch case 1 in such a manner that the first polarization plate 47 is located upwardly, namely on the side of the watch glass 5, whereas the second polarization plate 48 is located downwardly, namely on the side of the semi-transmission reflection plate 11. Since this liquid crystal display device 4 is positioned above the timepiece model 3, the information other than the time information is visibly displayed. When a mode select switch (not shown in detail) provided on the wrist watch case 1 is manipulated, the mode is selected, so that the liquid crystal display device 4 is brought into no display condition, and thus, the time instant on the dial plate 9 may be visibly confirmed through this liquid crystal display device 4. In other words, a means for stopping the supply of the display signal is provided with the electronic circuit of the circuit board 13.

In the liquid crystal display device 4 with such a structure, as the first polarization plate 47 positioned on the side of the timepiece glass 5, a polarization plate having high transmittance and also a high polarizing factor is employed, whereas as the second polarization plate 48 positioned on the sid of the dial plate 9, another polarization plate having high transmittance and also a polarizing factor lower than that of the first polarization plate 47 is used. That is, since both of the first and second polarization plates 47 and 48 own the high transmittance, when light is transmitted therethrough, the amount of light absorbed and scattered by the liquid crystal display device 4 is decreased and the amount of transmitted light is increased. As a consequence, when the time instant defined by the hour hand 15 and the minute hand 16 is visibly confirmed under such a condition that the liquid crystal display device is brought into the transparent condition, both of the hour hand 15 and the minute hand 16 can be brightly observed through the liquid crystal display device 4, and the visible confirmation of the time instant can be easily established. On the other hand, since the first polarization plate 47 on the side of the timepiece glass owns the higher polarizing factor than that of the second polarization plate 48 on the lower side, when the information is displayed by the liquid crystal display device 4, this information can be visibly confirmed as a very clear image. Accordingly, this information can be firmly read and moreover can be readily read.

The following experimental results about the optical characteristics of the first polarization plate 47 and the second polarization plate 48 could be obtained. Concretely speaking, as the first polarization plate 47 having the above-described characteristic, such a polarization plate was employed whose single transmittance was 46 to 47%, whose parallel transmittance was 39 to 40%, and whose polarization degree was approximately 95%. As the second polarization plate 48, such a polarization plate was employed whose single transmittance was 48 to 49%, whose parallel transmittance was 39 to 40%, and whose polarization degree was 83 to 84%.

It should be noted that when another polarization plate is employed as the first polarization plate 47, whose single transmittance is higher than or equal to 45%, whose parallel transmittance is higher than or equal to 38%, and whose polarization degree is approximately 93%, a better result may be achieved. Also, when another polarization plate is employed as the second polarization plate 48, whose single transmittance is higher than or equal to 45%, whose parallel transmittance is higher than or equal to 38%, and whose polarization degree is 80 to 90%, a better result may be obtained.

Although embodiments of the present invention have been described in detail with reference to preferred embodiments, it is to be understood the foregoing description is by way of examples only and is not to be constructed in a limiting sense. For example, the electro-luminescent light-emitting device and the semi-transmission reflection plate may not be arranged. Alternatively, the semi-transmission reflection plate may be substituted by a simple reflection plate. Also, the inventive idea of the present invention may be similarly applied not only the above-described electronic appliance, but also other electronic appliances such as an electronic notebook and an electronic timepiece. For instance, the member arranged in side the case and visibly confirmed via the liquid crystal display device is not the hands, but may be realized by such an interior member as a pictorial shape and a doll.

As previously described in detail, since in the electronic appliance equipped with the liquid crystal display device according to the present invention, the polarization plates of this liquid crystal display device own the high transmittance, the amount of transmitted light becomes large and therefore, the various members located below the liquid crystal display device can be visibly confirmed under better conditions. Also, since the polarizing factors of the polarization plates are large, the images displayed on the liquid crystal display device can be easily observed under better conditions.

## Claims

1. A liquid crystal display device comprising:
one pair of transparent electrode substrates (41, 42) arranged opposite to each other, a display electrode being formed on each of inner surfaces of said electrode substrates;
a liquid crystal material (44) sealed between said one pair of transparent electrode substrates;
a first polarization plate (47) arranged outside one electrode substrate of said one pair of transparent electrode substrates; and
a second polarization plate (48) arranged outside the other electrode substrate of said one pair of transparent electrode substrates, characterized in that:
said first polarization plate (47) is a polarization plate having high transmittance and a high polarizing factor, and said second polarization plate (48) is another polarization plate having high transmittance and a polarizing factor lower than that of said first polarization plate.

2. A liquid crystal display device as claimed in claim 1, characterized in that:
the transmittance of said first polarization plate (47) is selected to be higher than, or equal to 45% and the polarizing factor thereof is selected to be 91% to 95%, whereas the transmittance of said second polarization plate (48) is selected to be higher than, or equal to 45% and the polarizing factor thereof is selected to be 80% to 90%.

3. An electronic appliance comprising:
an appliance case (1) in which an opening portion is formed; and
a transmission type liquid crystal display device (4) in which polarization plates (47, 48) are arranged at said opening portion of the appliance case and on an upper surface thereof and a lower surface thereof, characterized in that:
the polarization plate (47) arranged on the upper surface of said liquid crystal display device is constructed of a first polarization plate having high transmittance and a high polarizing factor, whereas the polarization plate (48) arranged on the lower surface of said liquid crystal display device is constructed of a second polarization plate having high transmittance and a polarizing factor lower than that of said first polarization plate.

4. An electronic appliance equipped with a liquid crystal display device as claimed in claim 3, characterized in that:
the transmittance of said first polarization plate (47) is selected to be higher than, or equal to 45% and the polarizing factor thereof is selected to be 91% to 95%, whereas the transmittance of said second polarization plate (48) is selected to be higher than, or equal to 45% and the polarizing factor thereof is selected to be 80% to 90%.

5. An electronic appliance equipped with a liquid crystal display device as claimed in claim 3, further comprising:
hand display means (3) for displaying a time instant by a hand at a position opposite to said opening portion inside said appliance case.

6. An electronic appliance equipped with a liquid crystal display device as claimed in claim 5, characterized in that:
said hand display means (3) includes a dial plate (9, 10, 11) arranged opposite to said opening portion; and a hour hand (159 as well as a minute hand (16) for displaying the time instant on said dial plate.

7. An electronic appliance equipped with a liquid crystal display device as claimed in claim 6, characterized in that:
said dial plate includes a plate-shaped semi-transmission reflection plate (11); and a plate-shaped light-emitting element (10) arranged on a lower surface of said semi-transmission reflection plate.

8. An electronic appliance equipped with a liquid crystal display device as claimed in claim 3, characterized in that:
said appliance case (1) has a dimension and a shape, by which said appliance case is mountable on an wrist of a human body.
